# EUROPÄISCHE PATENTSCHRIFT

(11) **EP 3 608 862 B1**
(45) Veröffentlichungstag und Bekanntmachung des Hinweises auf die Patenterteilung: **10.12.2025**
(21) Anmeldenummer: 19186176.4
(22) Anmeldetag: 13.07.2019
(51) Int. Cl.: G06Q 30/00

(54) **VERFAHREN ZUM PROTOKOLLIEREN VON ERKENNUNGSMERKMALEN FÜR ERZEUGNISSE**
METHOD FOR LOGGING RECOGNITION FEATURES FOR PRODUCTS
PROCÉDÉ POUR CONSIGNER DES CARACTÉRISTIQUES DE DÉTECTION POUR MARCHANDISES

(30) Priorität: 07.08.2018 DE 102018006211
(43) Veröffentlichungstag der Anmeldung: 12.02.2020
(73) Patentinhaber: Bundesdruckerei GmbH, 10969 Berlin (DE)
(72) Erfinder: Byszio-Wegener, Frank, 10969 Berlin (DE); Bechtold, Ralf, 10969 Berlin (DE)
(74) Vertreter: Bittner, Thomas L.

(56) Entgegenhaltungen:
- EP-A1- 2 498 206
- WO-A1-2018/019720
- CN-A- 104 899 751
- CN-A- 107 018 490
- CN-A- 107 424 302
- CN-A- 107 657 460
- US-A1- 2010 220 853

## Beschreibung

### Gegenstand der Erfindung

Die vorliegende Erfindung betrifft ein Verfahren und eine Vorrichtung zum Protokollieren von Erkennungsmerkmalen, insbesondere von auf Erzeugnissen aufgebrachten Erkennungsmerkmalen. Die Erfindung betrifft zudem ein Computerprogrammprodukt und einen computerlesbaren Datenträger.

### Hintergrund der Erfindung

Zahlreiche Rechtsnormen schreiben Anforderungen für die Kennzeichnung von Produkten vor. Neben der allgemeinen Kennzeichnung von Erzeugnissen, also beispielsweise von Produkten oder Waren, insbesondere in Bezug auf Herstellerangaben, Produktbeschreibung, Materialangaben, Angabe von Inhaltsstoffen oder Verfallsdaten, sind bei bestimmten Erzeugnissen auch das einzelne Erzeugnis identifizierende Angaben auf dem Erzeugnis vorgeschrieben.

In der Europäischen Union wird zum Beispiel für Tabakprodukte gemäß Art. 15 der Richtlinie 2014/40/EU vom 3. April 2014 festgelegt, dass alle Packungen von Tabakerzeugnissen ein individuelles Erkennungsmerkmal haben müssen, welches die Feststellung des Herstellungstags und Herstellungsorts, der Herstellungsstätte, der Maschine, die zur Herstellung der Tabakerzeugnisse verwendet wurde, der Arbeitsschicht oder der Uhrzeit der Herstellung, der Produktbeschreibung, des geplanten Absatzmarkts, des geplanten Versandwegs und gegebenenfalls des Importeurs in die EU ermöglicht. Hierdurch soll die Nachverfolgbarkeit und Rückverfolgbarkeit aller Packungen gewährleistet werden, insbesondere zur Verhinderung von Manipulationen bei der Steuerpflicht.

Gemäß Art. 8 Absatz 1 der Durchführungsverordnung der Kommission vom 15. Dezember 2017 ist jede Packung von Tabakerzeugnissen mit einem Erkennungsmerkmal auf Packungsebene zu kennzeichnen. Das Erkennungsmerkmal besteht aus einer möglichst kurzen Abfolge alphanumerischer Zeichen (höchstens 50 Zeichen). Die Abfolge ist für jede Packung einmalig und umfasst folgende Datenelemente: (a) an erster Position alphanumerische Zeichen, die dem der Ausgabestelle des Erkennungsmerkmals zugeteilten Identifikationscode entsprechen; (b) eine Abfolge alphanumerischer Zeichen (Seriennummer), bei der die Wahrscheinlichkeit, dass sie abgeleitet werden kann, vernachlässigbar und in jedem Fall geringer als 1:10000 ist; (c) einen Code (Produktcode), mit dem sich Folgendes feststellen lässt: i) der Herstellungsort; ii) die Herstellungsstätte; iii) die zur Herstellung verwendete Maschine; iv) die Produktbeschreibung; v) der geplante Absatzmarkt; vi) der geplante Versandweg; vii) gegebenenfalls der Importeur, der das Erzeugnis in die Union einführt; (d) an letzter Position den Zeitstempel in Form einer Abfolge von acht Ziffern im Format JJMMTThh zur Angabe von Datum und Uhrzeit der Herstellung.

Gemäß Art. 8 Absatz 2 sind die Ausgabestellen für das Generieren eines Codes verantwortlich, der aus den in Absatz 1 (a), (b) und (c) genannten Elementen besteht. Gemäß Art. 8 Absatz 3 fügen die Hersteller bzw. Importeure den Zeitstempel gemäß Absatz 1 (d) dem Code hinzu, den die Ausgabestelle gemäß Absatz 2 generiert hat. Die konkrete Umsetzung der genannten Anforderungen stellt eine Herausforderung für potenzielle Ausgabestellen und Hersteller bzw. Importeure dar. Dies betrifft unter anderem die fälschungssichere Protokollierung und Nachverfolgbarkeit.

Es kann davon ausgegangen werden, dass in Zukunft auch für andere Erzeugnisse ähnliche Anforderung an die individuelle Kennzeichnung und Nachverfolgbarkeit zu erfüllen sein werden. Es besteht daher ein Interesse an Möglichkeiten zur Umsetzung der jeweiligen Anforderungen an die Erzeugung bzw. Generierung individueller Erkennungsmerkmale und deren Protokollierung durch autorisierte Ausgabestellen und Hersteller bzw. Importeure.

Ein Verfahren und ein Computerprogrammprodukt ist aus der WO 2018/019720 A1 bekannt. Ein weiteres Verfahren ist aus der EP 2498 206 A1 bekannt.

### Beschreibung der Erfindung

Vor dem beschriebenen Hintergrund ist es Aufgabe der vorliegenden Erfindung, ein Verfahren und eine Vorrichtung zum Protokollieren bzw. Logging von Erkennungsmerkmalen zur Verfügung zu stellen, welches bzw. welche insbesondere einerseits zur Umsetzung von Art. 8 der der Durchführungsverordnung der Kommission vom 15. Dezember 2017 zur Richtlinie 2014/40/EU geeignet ist, gleichzeitig aber auch möglichst vielfältig für andere Anwendungen einsetzbar ist.

Diese Aufgabe wird durch ein Verfahren zum Protokollieren einer Anzahl an Erkennungsmerkmalen nach Anspruch 1, eine Vorrichtung zum Protokollieren einer Anzahl an Erkennungsmerkmalen nach Anspruch 13, ein Computerprogrammprodukt nach Anspruch 14 und einen computerlesbaren Datenträger nach Anspruch 15 gelöst. Die abhängigen Ansprüche enthalten weitere, vorteilhafte Ausgestaltungen der Erfindung.

Das erfindungsgemäße Verfahren zum Protokollieren einer Anzahl an Erkennungsmerkmalen bezieht sich auf Erkennungsmerkmale, die jeweils eine Abfolge an alphanumerischen Zeichen umfassen, insbesondere jeweils aus einer Abfolge an alphanumerischen Zeichen bestehen. Die Erkennungsmerkmale können jeweils auf einem Erzeugnis aufgebracht sein. Das Verfahren umfasst folgende Schritte:
a) Auslesen der Abfolge an alphanumerischen Zeichen eines ersten Erkennungsmerkmals E₁ auf einem Erzeugnis,
b) Bilden eines ersten Hash-Wertes H₁ durch Anwenden einer Hashfunktion auf eine erste Abfolge N₁ alphanumerischer Zeichen, die die Abfolge alphanumerischer Zeichen des ausgelesenen ersten Erkennungsmerkmals E₁ und einen Zeitwert Z umfasst, insbesondere aus der Abfolge alphanumerischer Zeichen des ausgelesenen ersten Erkennungsmerkmals E₁ und einen Zeitwert Z besteht (H₁=hash(N₁)=hash(E₁,Z)),
c) physisches und/ oder elektronisches Speichern des ersten Hash-Wertes H₁ mittels einer Speichervorrichtung,
d) Auslesen eines nachfolgenden Erkennungsmerkmals Eₙ,
e) Bilden eines Hash-Wertes Hₙ durch Anwenden einer Hashfunktion auf eine Abfolge Nₙ alphanumerischer Zeichen, die die Abfolge alphanumerischer Zeichen des ausgelesenen Erkennungsmerkmals Eₙ oder einen auf diese Abfolge zurückzuführenden Hash-Wert und den zuvor gebildeten Hash-Wert Hₙ₋₁ umfasst, insbesondere aus der Abfolge alphanumerischer Zeichen des ausgelesenen Erkennungsmerkmals Eₙ und dem zuvor gebildeten Hash-Wert Hₙ₋₁ besteht (Hₙ=hash(Nₙ)=hash(Eₙ,Hₙ₋₁)),
f) physisches und / oder elektronisches Speichern des Hash-Wertes Hₙ mittels einer Speichervorrichtung,
g) iteratives Fortsetzen der Schritte d) bis f).

Das Verfahren umfasst zudem, dass alle ab einem festgelegten Zeitpunkt gebildeten Hash-Werte gespeichert werden, ein Zeitintervall zur Aufbewahrung der gebildeten Hash-Werte festgelegt wird, und gebildete Hash-Werte gelöscht werden, die zu einem Zeitpunkt gespeichert wurden, der länger zurückliegt als das festgelegte Zeitintervall.

Das erfindungsgemäße Verfahren hat den Vorteil, dass es die fälschungssichere Protokollierung von individuellen Erkennungsmerkmalen für Erzeugnisse ermöglicht. Die Manipulationssicherheit wird durch den Lawineneffekt der hash-Funktion und das iterative Vorgehen gewährleistet. Zudem ist das beschriebene Verfahren einerseits im Rahmen der Umsetzung oben genannten Durchführungsverordnung für Tabakerzeugnisse anwendbar und bietet in diesem Zusammenhang eine schnelle und vorgabengetreue Protokollierungsvariante für Hersteller und Importeure. Weiterhin kann das Verfahren auch zur Protokollierung und Nachverfolgung individuell gekennzeichneter anderer Erzeugnisse angewendet werden, es ist also diesbezüglich flexibel und vielfältig einsetzbar.

Das Speichern der erzeugten Hash-Werte Hₙ kann physisch und/oder elektronisch erfolgen, zum Beispiel durch Speichern auf einer Festplatte, auf einem Server, in einer Cloud, auf einer CD-ROM, auf einem WORM-Speicher, einer EPROM, etc.

In einer vorteilhaften Variante werden die Erkennungsmerkmale mittels eines Verfahrens zur Texterkennung (OCR-Optical Character Recognition) ausgelesen. Dadurch wird ein schnelles und zuverlässiges Auslesen möglich.

Der Zeitwert Z umfasst vorzugsweise einen qualifizierten Zeitstempel, wodurch insbesondere die Manipulationssicherheit gewährleistet wird.

In einer weiteren Variante wird eine Anzahl k an zu protokollierenden Erkennungsmerkmalen Eₙ festgelegt, wobei n eine natürliche Zahl von 1 bis k ist, und die Schritte d) bis f) fortgesetzt werden bis die festgelegte Anzahl k an Erkennungsmerkmalen protokolliert ist. Auf diese Weise können konkrete Produktchargen und Produktmengen zuverlässig und manipulationssicher protokolliert werden.

In einer möglichen Variante umfassen die Abfolgen Nₙ alphanumerischer Zeichen die Abfolge der alphanumerischen Zeichen des zuvor ausgelesenen Erkennungsmerkmals Eₙ₋₁. Hierdurch wird der damit verbundene Lawineneffekt zur Verbesserung der Fälschungssicherheit genutzt.

**In** einer weiteren Variante kann aus einer Anzahl, zum Beispiel zwei, der gebildeten Hash-Werte Hₙ mindestens ein weiterer Hash-Wert H_{y} gebildet werden. Insbesondere kann in einer Baumstruktur jeweils aus zwei nacheinander auf einer Ebene oder Stufe der Baumstruktur gebildeten Hash-Werten ein weiterer Hash-Wert gebildet werden. Dies kann für jede entstehende Ebene oder Stufe fortgesetzt werden. Die Abfolgen Nₙ alphanumerischer Zeichen können mindestens einen weiteren Hash-Wert H_{y} umfassen.

Vor dem Auslesen können einzelne Erkennungsmerkmale so erzeugt werden, dass einem aus alphanumerischen Zeichen gebildeten Identifikationscode und einer Seriennummer ein Produktcode hinzugefügt wird. Der Produktcode kann insbesondere alphanumerische Zeichen umfassen, mit denen der Herstellungsort und/oder die Herstellungsstätte und/oder die zur Herstellung verwendete Maschine und/oder die Produktbeschreibung und/oder der geplante Absatzmarkt und/oder der geplante Versandweg und/oder der Importeur des Produkts feststellbar ist. Zusätzlich oder alternativ dazu kann das Erkennungsmerkmal eine Anzahl an Positionen für alphanumerische Zeichen umfassen, die nach dem Erzeugen des Erkennungsmerkmals mit alphanumerischen Zeichen belegbar sind, zum Beispiel mit einem Zeitwert.

Alle ab einem festgelegten Zeitpunkt protokollierten Erkennungsmerkmale können zum Beispiel auf mindestens einem Datenträger gespeichert werden. Dabei werden optional auch die ausgelesenen Erkennungsmerkmale gespeichert. Es kann ein Zeitintervall zur Aufbewahrung der protokollierten Erkennungsmerkmale festgelegt werden. Die protokollierten Erkennungsmerkmale können gelöscht werden, die zu einem Zeitpunkt protokolliert wurden, der länger zurückliegt als das festgelegte Zeitintervall. Dabei kann basierend auf dem zuletzt gelöschten protokollierten Erkennungsmerkmal ein qualifizierter Zeitstempel erzeugt und gespeichert werden. Dies hat den Vorteil, dass vorhandene Speicherkapazität effektiv genutzt werden kann. Zudem kann die langfristig zu speichernde Datenmenge auf diese Weise gering gehalten werden.

Die erfindungsgemäße Vorrichtung umfasst eine Einrichtung zum Auslesen von Erkennungsmerkmalen, eine Vorrichtung zur Anwendung kryptographischer Hash-Funktionen und eine Speichervorrichtung zum Speichern gebildeter Hash-Werte. Die erfindungsgemäße Vorrichtung ist dazu ausgelegt ist, ein zuvor beschriebenes erfindungsgemäßes Verfahren auszuführen. Die erfindungsgemäße Vorrichtung kann zum Beispiel als Computer mit einem Scanner ausgestaltet sein.

Das erfindungsgemäße Computerprogrammprodukt umfasst Befehle, die bei der Ausführung des Programms durch einen Computer diesen veranlassen, ein oben beschriebenes erfindungsgemäßes Verfahren auszuführen. Der erfindungsgemäße computerlesbarer Datenträger zeichnet sich dadurch aus, dass auf ihm Befehle gespeichert sind, die bei der Ausführung des Programms durch einen Computer diesen veranlassen, ein oben beschriebenes erfindungsgemäßes Verfahren auszuführen. Die erfindungsgemäße Vorrichtung, das erfindungsgemäße Computerprogrammprodukt und der erfindungsgemäße computerlesbarer Datenträger haben dieselben Merkmale und Vorteile wie das zuvor beschriebene erfindungsgemäße Verfahren.

### Beschreibung von Ausführungsbeispielen

Weitere Merkmale, Eigenschaften und Vorteile der vorliegenden Erfindung werden im Folgenden anhand von Ausführungsvarianten unter Bezugnahme auf die beigefügten Figuren näher beschrieben. Alle bisher und im Folgenden beschriebenen Merkmale sind dabei sowohl einzeln als auch in einer beliebigen Kombination miteinander vorteilhaft.

Die Figuren sind nicht notwendigerweise detailgetreu und maßstabsgetreu und können vergrößert oder verkleinert dargestellt sein, um einen besseren Überblick zu bieten.

Der hier verwendete Ausdruck "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elementen verwendet werden. Wird beispielsweise eine Zusammensetzung beschrieben, dass sie die Komponenten A, B und/oder C, enthält, kann die Zusammensetzung A alleine; B alleine; C alleine; A und B in Kombination; A und C in Kombination; B und C in Kombination; oder A, B, und C in Kombination enthalten.
- Fig. 1: zeigt schematisch eine erste Variante des erfindungsgemäßen Verfahrens in Form eines Flussdiagramms.
- Fig. 2: zeigt schematisch eine zweite Variante des erfindungsgemäßen Verfahrens in Form eines Baumdiagramms.
- Fig. 3: zeigt schematisch eine erfindungsgemäße Vorrichtung.

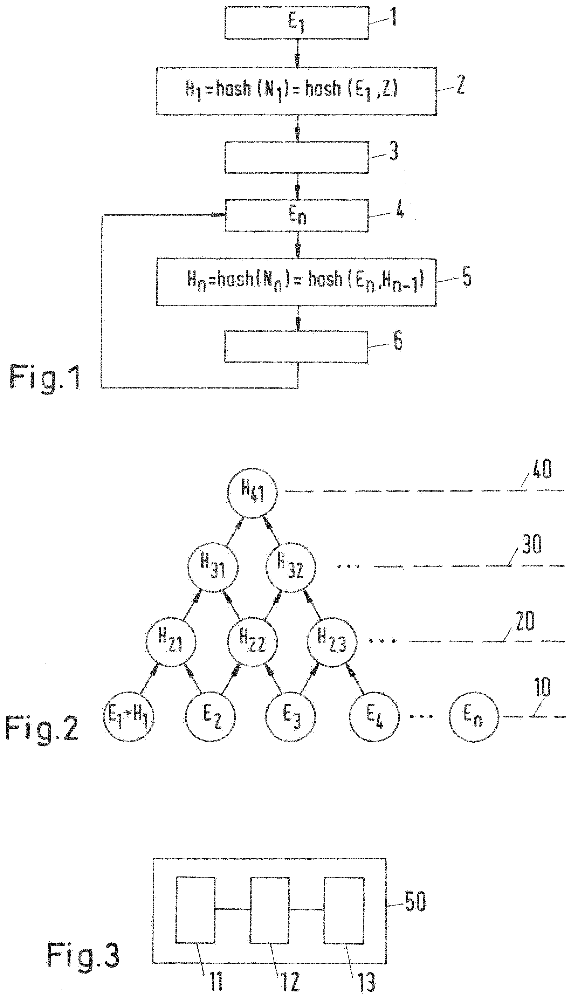

Die Figur 1 zeigt schematisch eine erste Variante des erfindungsgemäßen Verfahrens in Form eines Flussdiagramms. In einem ersten Schritt 1 wird die Abfolge an alphanumerischen Zeichen eines ersten Erkennungsmerkmals E₁ ausgelesen. Dies kann mittels eines Verfahrens zur Texterkennung erfolgen. In einem zweiten Schritt 2 wird ein erster Hash-Wertes H₁ durch Anwenden einer Hashfunktion auf eine erste Abfolge N₁ alphanumerischer Zeichen gebildet. Dabei umfasst die erste Abfolge N₁ die Abfolge alphanumerischer Zeichen des ausgelesenen ersten Erkennungsmerkmals E₁ und einen Zeitwert Z. Die erste Abfolge N₁ kann insbesondere aus den genannten Elementen bestehen. Bei dem Zeitwert Z kann es sich um einen qualifizierten Zeitstempel handeln. In einem dritten Schritt 3 wird der erste Hash-Werte H₁ mittels einer Speichervorrichtung gespeichert.

In einem vierten Schritt 4 wird ein nachfolgendes Erkennungsmerkmals Eₙ ausgelesen. In einem fünften Schritt 5 wird ein Hash-Wertes Hₙ durch Anwenden einer Hashfunktion auf eine Abfolge Nₙ alphanumerischer Zeichen gebildet. Die Abfolge Nₙ umfasst die Abfolge alphanumerischer Zeichen des ausgelesenen Erkennungsmerkmals Eₙ oder einen auf die Abfolge Eₙ zurückzuführenden Hash-Wert und den zuvor gebildeten Hash-Wert Hₙ₋₁. In einem sechsten Schritt 6 wird der Hash-Wert Hₙ mittels einer Speichervorrichtung gespeichert. Anschließend werden die Schritte 4 bis 6 iterativ fortgesetzt bzw. wiederholt. Insbesondere kann eine Anzahl k an zu protokollierenden Erkennungsmerkmalen Eₙ festgelegt werden, wobei n eine natürliche Zahl von 1 bis k ist, und die Schritte 4 bis 6 können fortgesetzt werden bis die festgelegte Anzahl k an Erkennungsmerkmalen protokolliert ist.

Die Figur 2 zeigt schematisch eine zweite Variante des erfindungsgemäßen Verfahrens in Form eines Baumdiagramms. In einer ersten Ebene oder Stufe 10 werden die zu protokollierenden Erkennungsmerkmale Eₙ (E₁, E₂, E₃, ...,Eₖ) ausgelesen. Aus dem ersten Erkennungsmerkmal E₁ und einem Zeitwert Z wird, die in Schritt 2 der Figur 1 beschrieben, ein erster Hash-Wert H₁ gebildet. In einer zweiten Ebene oder Stufe 20 wird aus dem ersten Hash-Wert H₁ und dem zweiten Erkennungsmerkmal E₂ ein zweiter Hash-Wert H₂₁ gebildet. Anschließend wird aus dem zweiten Erkennungsmerkmal E₂ und dem dritten Erkennungsmerkmal E₃ ein Hash-Wert H₂₂ gebildet. Aus dem Hash-Wert H₂₂, der auf das ausgelesene dritte Erkennungsmerkmal E₃ zurückzuführen ist, und dem zuvor gebildeten zweiten Hash-Wert H₂₁ wird in der dritten Ebene oder Stufe 30 ein dritter Hash-Wert H₃₁ gebildet. Auf der vierten Ebene oder Stufe 40 wird ein vierter Hash-Wert H₄₁ aus dem zuvor gebildeten dritten Hash-Wert H₃₁ und einem weiteren H₃₂ gebildet. Der weitere Hash-Wert H₃₂ ist aus den Hash-Werten H₂₂ und H₂₃ gebildet und über den Hash-Wert H₂₃, der aus den Erkennungsmerkmalen E₃ und E₄ gebildet ist, auf die ausgelesene Abfolge alphanumerischer Zeichen des Erkennungsmerkmals E₄ zurückzuführen.

Das Verfahren kann iterativ fortgesetzt werden, wobei mit jedem Auslesen eines weiteren Erkennungsmerkmals eine neue Ebene erzeugt werden kann. Alternativ dazu können für eine festgelegte Anzahl an Erkennungsmerkmalen individuelle Baumdiagramme erzeugt werden können, von denen jeweils mindestens zwei Baumspitzen über Hash-Werte miteinander verknüpft werden können.

Die in der Figur 3 schematisch gezeigte erfindungsgemäße Vorrichtung 50 zum Protokollieren bzw. Loggen einer Anzahl an Erkennungsmerkmalen umfasst eine Einrichtung 11 zum Auslesen von Erkennungsmerkmalen. Die Einrichtung 11 kann also zum Ausführen der Schritte 1 und 4 der Figur 1 ausgelegt sein. Die Vorrichtung 50 umfasst zudem eine Einrichtung 12 zur Anwendung kryptographischer Hash-Funktionen. Die Einrichtung 12 kann also zum Ausführen der Schritte 2 und 5 der Figur 1 ausgelegt sein. Die Vorrichtung 50 umfasst weiterhin eine Speichervorrichtung 13 zum Speichern der gebildeten Hash-Werte, optional zusätzlich zum Speichern der ausgelesenen Erkennungsmerkmale. Die Speichervorrichtung 13 kann insbesondere zum Ausführen der Schritte 3 und 6 der Figur 1 ausgelegt sein kann. Die Vorrichtung 50 ist dazu ausgelegt, ein erfindungsgemäßes Verfahren auszuführen. Bei der Vorrichtung 50 kann es sich zum Beispiel um einen Computer mit einem Scanner handeln.

Insgesamt stellt die vorliegende Erfindung eine kostengünstige Möglichkeit der Umsetzung der eingangs genannten rechtlichen Vorgaben zur Nachverfolgbarkeit von Produkten mit individuellen Erkennungsmerkmalen zur Verfügung, die ein hohes Maß an Manipulationssicherheit gewährleistet.

### Bezugszeichenliste:

- 1: Auslesen der Abfolge an alphanumerischen Zeichen eines ersten Erkennungsmerkmals
- 2: Bilden eines ersten Hash-Wertes H₁ durch Anwenden einer Hashfunktion auf eine erste Abfolge N₁ alphanumerischer Zeichen
- 3: Speichern des ersten Hash-Wertes H₁ mittels einer Speichervorrichtung
- 4: Auslesen eines nachfolgenden Erkennungsmerkmals Eₙ
- 5: Bilden eines Hash-Wertes Hₙ durch Anwenden einer Hashfunktion auf eine Abfolge Nₙ alphanumerischer Zeichen
- 6: Speichern des Hash-Wertes Hₙ mittels einer Speichervorrichtung
- 10: erste Ebene
- 11: Einrichtung zum Auslesen einer Anzahl an Erkennungsmerkmalen
- 12: Vorrichtung zur Anwendung kryptographischer Hash-Funktionen
- 13: Speichervorrichtung
- 20: zweite Ebene
- 30: dritte Ebene
- 40: vierte Ebene
- 50: Vorrichtung zum Protokollieren bzw. Loggen einer Anzahl an Erkennungsmerkmalen
- Eᵢ: Erkennungsmerkmale
- Hᵢ: Hash-Werte

## Patentansprüche

1. Verfahren zum Protokollieren einer Anzahl an Erkennungsmerkmalen auf Erzeugnissen, wobei jedes Erkennungsmerkmal eine Abfolge an alphanumerischen Zeichen umfasst und das Verfahren in einer Vorrichtung (50) folgende Schritte umfasst:
a) Auslesen (1) der Abfolge an alphanumerischen Zeichen eines ersten Erkennungsmerkmals E₁ auf einem Erzeugnis mittels einer Einrichtung zum Auslesen von Erkennungsmerkmalen (11),
b) Bilden eines ersten Hash-Wertes H₁ (2) durch Anwenden einer Hashfunktion auf eine erste Abfolge N₁ alphanumerischer Zeichen mittels einer Einrichtung zur Anwendung kryptografischer Hash-Funktionen (12), wobei die erste Abfolge N₁ alphanumerischer Zeichen die Abfolge alphanumerischer Zeichen des ausgelesenen ersten Erkennungsmerkmals E₁ und einen Zeitwert Z umfasst,
c) physisches und / oder elektronisches Speichern (3) des ersten Hash-Wertes H₁ mittels einer Speichervorrichtung (13),
d) Auslesen (4) eines nachfolgenden Erkennungsmerkmals Eₙ mittels der Einrichtung zum Auslesen von Erkennungsmerkmalen (11),
e) Bilden eines Hash-Wertes Hₙ (5) durch Anwenden einer Hashfunktion auf eine Abfolge Nₙ alphanumerischer Zeichen mittels der Einrichtung zur Anwendung kryptografischer Hash-Funktionen (12), wobei die Abfolge Nₙ alphanumerischer Zeichen die Abfolge alphanumerischer Zeichen des ausgelesenen Erkennungsmerkmals Eₙ oder einen auf diese Abfolge zurückzuführenden Hash-Wert und den zuvor gebildeten Hash-Wert Hₙ₋₁ umfasst,
f) physisches und / oder elektronisches Speichern (6) des Hash-Wertes Hₙ mittels der Speichervorrichtung (13), und
g) iteratives Fortsetzen der Schritte d) bis f,
wobei alle ab einem festgelegten Zeitpunkt gebildeten Hash-Werte gespeichert werden, ein Zeitintervall zur Aufbewahrung der gebildeten Hash-Werte festgelegt wird, und gebildete Hash-Werte gelöscht werden, die zu einem Zeitpunkt gespeichert wurden, der länger zurückliegt als das festgelegte Zeitintervall.

2. Verfahren nach Anspruch 1, **dadurch gekennzeichnet, dass** die Erkennungsmerkmale mittels eines Verfahrens zur Texterkennung ausgelesen werden.

3. Verfahren nach Anspruch 1 oder Anspruch 2, **dadurch gekennzeichnet, dass** der Zeitwert Z einen qualifizierten Zeitstempel umfasst.

4. Verfahren nach einem der Ansprüche 1 bis 3, **dadurch gekennzeichnet, dass** eine Anzahl k an zu protokollierenden Erkennungsmerkmalen Eₙ festgelegt wird, wobei n eine natürliche Zahl von 1 bis k ist, und die Schritte d) bis f) fortgesetzt werden bis die festgelegte Anzahl k an Erkennungsmerkmalen protokolliert ist.

5. Verfahren nach einem der Ansprüche 1 bis 4, **dadurch gekennzeichnet, dass** die Abfolgen Nₙ alphanumerischer Zeichen die Abfolge der alphanumerischen Zeichen des zuvor ausgelesenen Erkennungsmerkmals Eₙ₋₁ umfassen.

6. Verfahren nach einem der Ansprüche 1 bis 5, **dadurch gekennzeichnet, dass** aus einer Anzahl der gebildeten Hash-Werte H₁ mindestens ein weiterer Hash-Wert H_{y} gebildet wird.

7. Verfahren nach einem der Ansprüche 1 bis 6, **dadurch gekennzeichnet, dass** die Abfolgen Nₙ alphanumerischer Zeichen mindestens einen weiteren Hash-Wert H_{y} umfassen.

8. Verfahren nach einem der Ansprüche 1 bis 7, **dadurch gekennzeichnet, dass** vor dem Auslesen einzelne Erkennungsmerkmale so erzeugt werden, dass einem aus alphanumerischen Zeichen gebildeten Identifikationscode und einer Seriennummer ein Produktcode hinzugefügt wird.

9. Verfahren nach Anspruch 8, **dadurch gekennzeichnet, dass** der Produktcode alphanumerische Zeichen umfasst, mit denen der Herstellungsort und / oder die Herstellungsstätte und / oder die zur Herstellung verwendete Maschine und / oder die Produktbeschreibung und / oder der geplante Absatzmarkt und / oder der geplante Versandweg und / oder der Importeur des Produkts feststellbar ist.

10. Verfahren nach einem der Ansprüche 1 bis 9, **dadurch gekennzeichnet, dass** das Erkennungsmerkmal eine Anzahl an Positionen für alphanumerische Zeichen umfasst, die nach dem Erzeugen des Erkennungsmerkmals mit alphanumerischen Zeichen belegbar sind.

11. Verfahren nach einem der vorangegangenen Ansprüche, dadurch **gekennzeich**- **net**, dass basierend auf dem zuletzt gelöschten gespeicherten Hash-Werte ein qualifizierter Zeitstempel erzeugt und gespeichert wird.

12. Vorrichtung (50) zum Protokollieren einer Anzahl an Erkennungsmerkmalen, **dadurch gekennzeichnet, dass** die Vorrichtung (50) eine Einrichtung (11) zum Auslesen von Erkennungsmerkmalen, eine Vorrichtung (12) zur Anwendung kryptographischer Hash-Funktionen und eine Speichervorrichtung (13) zum Speichern gebildeter Hash-Werte umfasst, und die Vorrichtung (50) dazu ausgelegt ist, ein Verfahren nach einem der Ansprüche 1 bis 11 auszuführen.

13. Computerprogrammprodukt, welches Befehle umfasst, die bei der Ausführung des Programms durch einen Computer diesen veranlassen, ein Verfahren nach einem der Ansprüche 1 bis 11 auszuführen.

14. Computerlesbarer Datenträger, auf welchem Befehle gespeichert sind, die bei der Ausführung des Programms durch einen Computer diesen veranlassen, ein Verfahren nach einem der Ansprüche 1 bis 11 auszuführen.

## Claims

1. Method for recording a number of identification characteristics on products, wherein each identification characteristic comprises a sequence of alphanumeric characters and the method comprises the following steps in a device (50):
a) reading out (1) the sequence of alphanumeric characters of a first identification characteristic E₁ on a product by means of a device for reading out identification characteristics (11),
b) forming a first hash value H₁ (2) by applying a hash function to a first sequence N₁ of alphanumeric characters by means of a device for applying cryptographic hash functions (12), wherein the first sequence N₁ of alphanumeric characters comprises the sequence of alphanumeric characters of the read-out first identification characteristic E₁ and a time value Z,
c) physically and/or electronically storing (3) the first hash value H₁ by means of a storage device (13),
d) reading out (4) a subsequent identification characteristic Eₙ by means of the device for reading out identification characteristics (11),
e) forming a hash value H₁ (5) by applying a hash function to a sequence Nₙ of alphanumeric characters by means of the device for applying cryptographic hash functions (12), wherein the sequence Nₙ of alphanumeric characters comprises the sequence of alphanumeric characters of the read-out identification characteristic Eₙ or a hash value to be attributed to this sequence and the previously formed hash value Hₙ₋₁,
f) physically and/or electronically storing (6) the hash value Hₙ by means of the storage device (13), and
g) iteratively continuing the steps d) to f,
wherein all hash values formed from a determined point in time are stored, a time interval for retaining the formed hash values is determined, and formed hash values which were stored at a point in time which is longer than the determined time interval are deleted.

2. Method according to claim 1, **characterized in that** the identification characteristics are read out by means of a method for text recognition.

3. Method according to claim 1 or claim 2, **characterized in that** the time value Z comprises a qualified time stamp.

4. Method according to any one of claims 1 to 3, **characterized in that** a number k of identification characteristics Eₙ to be recorded is determined, wherein n is a natural number from 1 to k, and the steps d) to f) are continued until the determined number k of identification characteristics is recorded.

5. Method according to any one of claims 1 to 4, **characterized in that** the sequences Nₙ of alphanumeric characters comprise the sequence of the alphanumeric characters of the previously read-out identification characteristic Eₙ₋₁.

6. Method according to any one of claims 1 to 5, **characterized in that** at least one further hash value H_{y} is formed from a number of the formed hash values Hₙ.

7. Method according to any one of claims 1 to 6, **characterized in that** the sequences Nₙ of alphanumeric characters comprise at least one further hash value H_{y}.

8. Method according to any one of claims 1 to 7, **characterized in that** individual identification characteristics are generated before reading out such that a product code is added to an identification code formed from alphanumeric characters and to a serial number.

9. Method according to claim 8, **characterized in that** the product code comprises alphanumeric characters with which the production site and/or the production facility and/or the machine used for production and/or the product description and/or the planned sales market and/or the planned shipping route and/or the importer of the product can be determined.

10. Method according to any one of claims 1 to 9, **characterized in that** the identification characteristic comprises a number of positions for alphanumeric characters which can be occupied with alphanumeric characters after generating the identification characteristic.

11. Method according to any one of the preceding claims, **characterized in that** a qualified time stamp is generated and stored on the basis of the last deleted stored hash values.

12. Device (50) for recording a number of identification characteristics, **characterized in that** the device (50) comprises a device (11) for reading out identification characteristics, a device (12) for applying cryptographic hash functions and a storage device (13) for storing formed hash values, and the device (50) is designed to carry out a method according to any one of claims 1 to 11.

13. Computer program product which comprises commands which, when the program is executed by a computer, cause the latter to carry out a method according to any one of claims 1 to 11.

14. Computer-readable data carrier on which commands are stored which, when the program is executed by a computer, cause the latter to carry out a method according to any one of claims 1 to 11.

## Revendications

1. Procédé pour consigner une pluralité de caractéristiques d'identification sur des produits, dans lequel chaque caractéristique d'identification comprend une séquence de caractères alphanumériques et le procédé comprend les étapes suivantes dans un dispositif (50) :
a) la lecture (1) de la séquence de caractères alphanumériques d'une première caractéristique d'identification E₁ sur un produit au moyen d'un dispositif de lecture de caractéristiques d'identification (11),
b) la formation d'une première valeur de hachage H₁ (2) par application d'une fonction de hachage à une première séquence N₁ de caractères alphanumériques au moyen d'un dispositif d'application de fonctions de hachage cryptographiques (12), dans lequel la première séquence N₁ de caractères alphanumériques comprend la séquence de caractères alphanumériques de la première caractéristique d'identification lue E₁ et une valeur temporelle Z,
c) le stockage physique et/ou électronique (3) de la première valeur de hachage H₁ au moyen d'un dispositif de stockage (13),
d) la lecture (4) d'une caractéristique d'identification suivante Eₙ au moyen du dispositif de lecture de caractéristiques d'identification (11),
e) la formation d'une valeur de hachage Hₙ (5) par application d'une fonction de hachage sur une séquence Nₙ de caractères alphanumériques au moyen du dispositif d'application de fonctions de hachage cryptographiques (12), dans lequel la séquence Nₙ de caractères alphanumériques comprend la séquence de caractères alphanumériques de la caractéristique d'identification lue Eₙ ou une valeur de hachage attribuable à cette séquence et la valeur de hachage Hₙ₋₁ précédemment formée ;
f) la mémorisation physique et/ou électronique (6) de la valeur de hachage H₁ au moyen du dispositif de stockage (13) ; et
g) la poursuite itérative des étapes d) à f,
dans lequel toutes les valeurs de hachage formées à partir d'un instant donné sont mémorisées, un intervalle de temps pour le stockage des valeurs de hachage formées est spécifié et les valeurs de hachage formées sont supprimées, qui ont été stockées à un instant donné, qui remonte plus loin que l'intervalle de temps spécifié.

2. Procédé selon la revendication 1, **caractérisé en ce que** les caractéristiques d'identification sont lues à l'aide d'un procédé de reconnaissance de texte.

3. Procédé selon la revendication 1 ou 2, **caractérisé en ce que** la valeur temporelle comprend un pointeur temporel qualifié.

4. Procédé selon une des revendications 1 à 3, **caractérisé en ce qu'**un nombre k de caractéristiques d'identification Eₙ à enregistrer est spécifié, dans lequel n est un entier naturel compris entre 1 et k et les étapes d) à f) sont poursuivies jusqu'à ce que le nombre k spécifié de caractéristiques d'identification ait été enregistré.

5. Procédé selon une des revendications 1 à 4, **caractérisé en ce que** les séquences Nₙ de caractères alphanumériques comprennent la séquence de caractères alphanumériques de la caractéristique d'identification Eₙ₋₁ précédemment lue.

6. Procédé selon une des revendications 1 à 5, **caractérisé en ce qu'**au moins une autre valeur de hachage H_{y} est formée à partir d'un certain nombre de valeurs de hachage Hₙ formées.

7. Procédé selon une des revendications 1 à 6, **caractérisé en ce que** les séquences Nₙ de caractères alphanumériques comprennent au moins une valeur de hachage H_{y} supplémentaire.

8. Procédé selon une des revendications 1 à 7, **caractérisé en ce que**, avant la lecture, des caractéristiques d'identification individuelles sont générées, de sorte qu'un code produit soit ajouté à un code d'identification composé de caractères alphanumériques et d'un numéro de série.

9. Procédé selon la revendication 8, **caractérisé en ce que** le code produit comprend des caractères alphanumériques permettant de déterminer le lieu de fabrication et/ou l'usine de fabrication et/ou la machine utilisée pour la fabrication et/ou la description du produit et/ou le marché de vente prévu et/ou l'itinéraire d'expédition prévu et/ou l'importateur du produit.

10. Procédé selon une des revendications 1 à 9, **caractérisé en ce que** la caractéristique d'identification comprend un certain nombre d'emplacements pour caractères alphanumériques, qui peuvent être attribués à des caractères alphanumériques après la génération de la caractéristique d'identification.

11. Procédé selon une des revendications précédentes, **caractérisé en ce qu'**un pointeur temporel qualifié est généré et stocké sur la base de la dernière valeur de hachage stockée supprimée.

12. Dispositif (50) pour consigner une pluralité de caractéristiques d'identification, **caractérisé en ce que** le dispositif comprend un dispositif (11) de lecture des caractéristiques d'identification, un dispositif (12) d'application de fonctions de hachage cryptographiques et un dispositif de stockage (13) des valeurs de hachage formées en vue du stockage et le dispositif (50) est conçu pour mettre en œuvre un procédé selon une des revendications 1 à 11.

13. Produit de programme informatique comprenant des instructions qui, lors de l'exécution du programme par un ordinateur, entraînent l'exécution par celui-ci d'un procédé selon une des revendications 1 à 11.

14. Support de données lisible par ordinateur, sur lequel sont stockées des instructions qui, lors de l'exécution du programme par un ordinateur, entraînent l'exécution par celui-ci d'un procédé selon une des revendications 1 à 11.
